Europäisches Patentamt

European Patent Office

Office européen des brevets

(19)

(11) Publication number: **0 048 723**
**B1**

# EUROPEAN PATENT SPECIFICATION

(12)

(45) Date of publication of patent specification: **01.08.84**

(21) Application number: **81900735.2**

(22) Date of filing: **03.04.81**

(86) International application number:
**PCT/GB81/00062**

(87) International publication number:
**WO 81/02888 15.10.81 Gazette 81/24**

(51) Int. Cl.³: **C 02 F  11/00,
C 02 F  11/18, A 23 K  1/00,
C 05 F  7/00**

(54) TREATMENT OF ACTIVATED OR HUMUS SLUDGE.

(30) Priority: **03.04.80 GB  8011296
17.11.80 GB  8036783**

(43) Date of publication of application:
**07.04.82 Bulletin 82/14**

(45) Publication of the grant of the patent:
**01.08.84 Bulletin 84/31**

(84) Designated Contracting States:
**DE FR GB NL SE**

(56) References cited:
**DE - A - 1 459 497
DE - A - 1 792 247
DE - A - 2 648 788
FR - A - 2 094 966
GB - A - 1 525 451**

(73) Proprietor: **OXFAM
274 Banbury Road
Oxford, OX2 7DZ (GB)**

(72) Inventor: **GRANT, Roy Arthur
20 Chester Road
Branksome Park Poole, Dorset (GB)**

(74) Representative: **Spencer, Graham Easdale et al,
A.A. Thornton & CO Northumberland House 303-
306, High Holborn
London WC1V 7LE (GB)**

Courier Press, Leamington Spa, England.

## Description

The present invention is concerned with the treatment of activated or humus sludge.

A conventional method for the treatment of sewage and other waste waters in the activated sludge process, in which the biological oxygen demand of the waste water is reduced by the growth of microorganisms therein under aerated conditions.

Another widely used system is the trickling filter in which sewage or waste water is percolated through a bed of stone or clinker under aerobic conditions. Micro-organisms grow in the filter and produce what is called humus sludge which has a composition similar to activated sludge and which contains a high percentage of protein.

The resulting activated or humus sludge solids are then concentrated, for example by settlement, and dewatered and are then disposed of by dumping or by anaerobic digestion.

This procedure is complicated by the fact that activated or humus sludge is difficult to dewater to a readily disposable material of high solids content because the solids in the sludge retain large volumes of water.

Various method of facilitating dewatering of activated sludge have been proposed. For example, British Specifications 1521207 and 1521672 disclose a method of facilitating dewatering of activated sludge, which comprises heating an acidified activated sludge of pH not greater than 2.2 to a temperature of 150 to 210°F (65—99°C).

A similar method of facilitating the dewatering of activated sludge is described in French Specification 2327965; in this method, activated sludge having a solids content of 2 to 5% is acidified to a pH of 2 to 3 and then heated to 70°C to 100°C. The dewatered solids obtained from the thus-treated sludge, like the dewatered solids obtained from sludge treated according to the method of British Specification 1521672, is said to be suitable for use as an animal feed or fertiliser.

The acidification of activated sludge so as to facilitate dewatering thereof is also disclosed in USSR Patent 597648; like the methods disclosed in the above-mentioned British Specifications 1521207 and 1521672 and French Specification 2327965, this method involves heat treatment of the acidified sludge. The acidification of other types of sludge so as to facilitate dewatering thereof is disclosed in German Offenlegungsschrift (2327673, British Specifications 1287249, 1345781 and 1577036, U.S. Patent 4208282, French Specification 2414026 and European Patent Application Serial No. 0005011. These methods all involves heat treatment of acidified sludge (like the methods of treatment of activated sludge described above) or the addition of another material such as a rubber latex (British Specification 1287249), calcium oxide or hydroxide (British Specification 1345781), starch (U.S. Patent 4208282), a silicon compound (French Specification 2414026) or a flocculating agent (European Application 0005011) after acidification. None of these documents have any disclosure of the addition of a base to the sludge prior to acidification.

The addition of a base to sludge has been known per se for a very long time: for example, it is described in British Specification 445395, which was published as long ago as 1936. The addition of a base to sludge is also disclosed in the above-mentioned USSR Patent 597648, British Specification 1345781 and French Specification 2414026; in each case, the base is added after acidification.

We have now found unexpectedly that if thickened activated or humus sludge having a solids content of at least 2% by weight is treated (before acidification) with a base so as to raise the pH thereof to more than 8, then the treated sludge can be made to spontaneously flocculate by subsequent addition of acid. The resulting treated sludge can be readily dewatered by conventional means, such as a filter press, centrifuge or vacuum filter.

The process according to the invention has some resemblance to the process described in British Specification 1381306, which describes a method for flocculating bacterial cells in an aqueous medium by raising the pH to 8 to 11 by treatment with an alkali and/or heating the medium to 50 to 200°C, followed by lowering the pH to 2 to 5. The above-mentioned British Specification 1381306 is, however, concerned with the flocculation of single cell protein bacterial cultures (not activated sludge); typical concentrations for such cultures are 0.25% (Example 2) to 0.8% (Example 1).

An embodiment of the process described in British Specification 1381306 involves alkali treatment without heat treatment followed by acidification; we have attempted to repeat this process for activated sludge having a similar concentration to the bacterial culture media disclosed in the British specification. However, we have found that satisfactory flocculation cannot be achieved even with an activated sludge having a concentration as high as 0.8% (the maximum concentration disclosed in the British specification). We have found that satisfactory flocculation can only be achieved if the activated sludge is first thickened to a solids content of at least 2% by weight; the same is true for humus sludge.

The sludge may be thickened (concentrated) to make it suitable for use in the method according to the invention by settling, centrifuging, air flotation or other suitable means; air flotation is preferred, particularly air flotation in the presence of a polyelectrolyte. The thickened sludge preferably has a solids content of at least 4% by weight, more preferably 4 to 5% by weight.

Referring once again to the above-mentioned British Specification 1381306, this teaches that heating is desirable in order to ensure satisfactory flocculation (compare Sample A with Samples B to F in Table 1 thereof); it is an advantage of the method according to the invention that the sludge can be at ambient temperature throughout (that is, there is no need for heat treatment of the sludge in order to ensure satisfactory dewatering properties). However, it may sometimes be desired to heat the sludge during and/or after base treatment and/or acidification; when the sludge is heat-treated, it may be heated, for example, during acidification, to a temperature of 50 to 100°C for a period of up to several hours (for example, heat treatment at 100°C for about one hour).

The base used in the base treatment stage may be, for example, caustic soda, caustic potash, ammonia, sodium carbonate or lime; caustic soda is preferred. The pH of the sludge following base treatment is preferably 10 to 13, more preferably 11 to 12; sufficient base should be added such that the base-treated sludge will gel, or assume the appearance of a gel, on standing. The optimum quantity of base will, of course, depend on the nature thereof and on the composition of the sludge being treated. While we do not wish to be bound by any theory, it is believed that the base attacks mucopolysaccharide coatings on cells present in the sludge, to allow flocculation on subsequent acidification.

Following the base treatment, the sludge is allowed to gel, or assume the appearance of a gel, before acidification. The optimum time for addition of acid may be determined by acidifying small aliquots of base-treated sludge at intervals and adding acid to the bulk of the sludge when satisfactory flocculation of the respective aliquot is achieved. The base-treated sludge is generally allowed to stand prior to acidification for a relatively short time, such as one to five hours (for example, about one hour), without agitation or with only gentle agitation.

The acid used in the acidification stage may be, for example, sulphuric acid or hydrochloric acid; the optimum pH of the sludge after acidification depends on the particular sludge, but is preferably between 1 and 4.

It is a particular advantage of the present invention that the dewatered sludge, which may have a solids content of about 30% by weight, obtained from the treated sludge may be readily processed to form a sterile dried product having a high protein content and a low heavy metal content. The dried product is accordingly suitable for use as an animal or fish feed or an organic fertilizer. If desired, the heavy metal content can be further reduced by adding a chelating agent, such as ethylene diamine tetraacetic acid to the sludge. An ash content as low as 10% by weight can be achieved by this means.

The rate of filtration of the treated sludge can be improved if some previously produced dried material (in powdered form) or a filter aid is added to the treating sludge. When the resulting filtered material is to be used for producing an animal feed any filter aid used should, of course, be nontoxic. An example of a suitable non-toxic filter aid is soya flour.

The dewatered sludge may, if desired, be treated with an organic solvent to remove fats and/or any other organic impurities, for example, when it is a filter cake, while the latter is still in the filter press.

In accordance with one embodiment of the invention, protein material may be dissolved out of the filter cake by means of an alkaline solution, the alkaline solution then being filtered and protein material precipitated out by acid treatment. This acid treatment may be effected by extruding the alkaline solution into an acid coagulant to precipitate protein material in fibrous form, which is then dried.

The dewatered sludge, or the precipitated protein material mentioned above, is preferably neutralized before drying, for example, by mixing with caustic soda, ammonia or hydrated lime. The use of hydrated lime is advantageous as this enables neutralisation to be carried out without addition of liquid.

Drying is preferably carried out under conditions which will inactivate bacterial spores and worm ova, if present, without destruction of proteins. The temperature is preferably from 100 to 120°C and drying is preferably effected with air circulation.

The resulting dried material may be ground to a powder, mixed with other feed ingredients, such as maize and vitamins, and pelletized to produce a commercially useful animal or fish feed.

The method according to the invention is well adapted for continuous operation and does not require large capital investments.

In order that the present invention may be more fully understood, the following Examples are given by way of illustration only.

Example 1

Surplus activated sludge from a sewage treatment plant was thickened by means of dissolved air flotation in a pilot plant at a throughput of 3 gallons ($13.6 \times 10^{-3} m^3$) per minute. The thickened sludge was scraped into a receiving vessel at half-hourly intervals and the average solids content of the thickened sludge was found to be 5% by weight.

The pH of the thickened sludge was adjusted to 11.5 by addition of caustic soda solution (40% W/V) with stirring and the alkaline sludge allowed to stand for 2 hours at ambient temperature. The pH of the sludge was then lowered to pH 1.5 by addition of sulphuric acid (75% W/W) and the acidified sludge allowed to stand overnight (17 hours) at ambient temperature during which time the sludge flocculated and partially separated from the liquid. The subnatent liquid was drawn off and replaced by clean water. The resulting mixture was then dewatered in a conventional plate and frame filter press over a period of six hours to yield a filter cake of 2 cm thickness having a total solids content of 25%. The filter cake was removed, mashed and neutralised by the addition of calcium hydroxide powder with thorough mixing.

The neutralised cake which then had a solids content of 25% by weight was dried in a tray dryer with air circulation at a temperature of 110°C. The composition of the dry product was as follows:—

| | |
|---|---|
| Nitrogen | 8.8% |
| Protein | 53.5% |
| Fat | 1.5% |
| Ash | 14.9% |
| Carbohydrate | 4.0% |
| K | 0.3% (as $K_2O$) |
| P | 3.4% (as $P_2O_5$) |
| Non-protein N | 0.5% |
| Fe | 0.18% |
| Cd | 0.5 p.p.m. |

Trials showed that the product was useful as a replacement for fish meal in trout feed and equivalent to dried blood as an organic fertilizer. The trials were as follows:

Fertilizer trial

Dried activated sludge protein (prepared as indicated above) was compared with dried blood (12% N) as a natural organic nitrogen source. Control plots with no added nitrogen were included and red beet (C. Boltardy) was grown (red beet is very sensitive to nitrogen supply and has a high nitrogen requirement).

There were thus three treatments, there were three replicates and the design was randomized. Nitrogen was applied at the rate of 100 kg N/ha.

When the beets were harvested, the fresh weight of roots (tonnes/ha) was 15.3 for the control plots (no added nitrogen) and 41.2 and 40.6 for the plots for which activated sludge protein and dried blood, respectively, were used. The corresponding weights of harvested foliage (in tonnes/ha) were 16.6, 22.1 and 25.7, respectively.

Feeding trial

Two batches of rainbow trout were maintained for a period of approximately 10 weeks on artificial rations. A control group (64 fish) were fed a standard commercial trout diet (Pilwoods No. 5 Pellet) whilst an experiment group (129 fish) were fed a diet in which approximately 50% of the fish meal content had been replaced by activated sludge protein, prepared as indicated above.

The fish were kept in small concrete raceways adequately supplied with borehole water at temperature within the range 11—12°C. The fish were fed 2—3% of their body weight in food per day in accordance with appetite.

Diet ingredients

| | | | |
|---|---|---|---|
| A. Experimental diet | — Crude protein | 463 g/kg diet. | |
| | Oil | 83 g/kg diet. | |
| | Fibre | 29.4 g/kg diet. | |
| B. Control diet | — Crude protein | 460 g/kg diet. | |
| | Oil | 76.3 g/kg diet. | |
| | Fibre | 30.0 g/kg diet. | |

17% of the total experimental diet was activated sludge protein. This replaced 50% of the fish meal content.

At the start, the control trout had a mean weight of 69.6 g. while those fed on the experimental diet had a mean weight of 71.4 g. The mean weights of the control trout after 20, 45 and 72 days were 92.9 g., 100.0 g. and 123.0 g., respectively, while the corresponding mean weights of trout fed on the experimental diet were 86.8 g., 111.4 g. and 127.1 g., respectively.

This indicates that the growth of fish on the experimental diet was slightly better than that of fish on the control diet.

Example 2

Humus sludge from a sewage works was thickened by air flotation as described in Example 1. The thickened humus sludge had an average solids content of 4.5% by weight.

The pH of the thickened sludge was adjusted to 11.5 by the addition of sodium hydroxide solution (40% w/v) with stirring and the alkaline sludge allowed to stand for 1 hour at ambient temperature. The pH of the sludge was then lowered to 2 by the addition of sulphuric acid (75% w/v) and the acidified sludge allowed to stand overnight at ambient temperature during which time the mixture flocculated. The flocculated sludge was passed through a filter press having recessed plates over a period of five hours. When the cake was removed from the filter it had a solids content of 26% by weight.

The filter cake was mashed and neutralised with calcium hydroxide powder with thorough mixing; the neutralised cake had a solids content of 27%. The neutralised material was dried in a tray dryer with air circulation at a temperature of 110°C. The composition of the product was as follows:—

| | |
|---|---|
| Protein | 49.5% |
| Ash | 21.0% |
| Fat | 8.8% |
| Carbohydrate | 5.0% |
| K | 0.4% (as $K_2O$) |
| P | 2.5% (as $P_2O_5$) |
| Non-protein nitrogen | 0.6%. |

## Claims

1. A method of producing solid material suitable for use as an animal feed, a fish feed or a fertilizer, which comprises acidifying a thickened activated or humus sludge having a solids content of at least 2% by weight, to produce an acidified flocculated sludge having a pH of 1 to 4, dewatering the acidified flocculated sludge and recovering the resulting solid material, characterised in that the thickened sludge is treated, prior to acidification, with a base to raise the pH of the sludge to more than 8, the whole of the base-treated sludge being then subjected to said acidification, dewatering and solids recovery.

2. A method according to claim 1, characterised in that the pH is raised by the base treatment to 11 to 12.

3. A method according to claim 1 or 2, characterised in that the sludge is allowed to stand between base treatment and acidification for one to five hours.

4. A method according to any of claims 1 to 3, characterised in that the sludge is at ambient temperature throughout.

5. A method according to any of claims 1 to 4, characterised in that the sludge is at a temperature of 50 to 100°C during acidification.

## Patentansprüche

1. Verfahren zur Herstellung eines zur Verwendung als Tierfutter, Fischfutter oder Düngemittel geeigneten Feststoffs, bei dem man verdickten Belebt- oder Humusschlamm mit einem Feststoffgehalt von mindestens 2 Gew.-% ansäuert, um einen angesäuerten ausgeflockten Schlamm mit einem pH von 1 bis 4 zu erzeugen, den angesäuerten ausgeflockten Schlamm entwässert und den entstandenen Feststoff gewinnt, dadurch gekennzeichnet, dass man den verdickten Schlamm vor dem Ansäuern mit einer Base behandelt, um den pH des Schlamms auf über 8 zu erhöhen, wobei der mit Base behandelte Schlamm dann als ganzes der besagten Ansäuerung, Entwässerung und Feststoffgewinnung unterzogen wird.

2. Verfahren nach Anspruch 1, dadurch gekennzeichnet, dass man den pH durch die Basenbehandlung auf 11 bis 12 erhöht.

3. Verfahren nach Anspruch 1 oder 2, dadurch gekennzeichnet, dass man den Schlamm zwischen der Basenbehandlung und dem Ansäuern 1 bis 5 Stunden lang stehen lässt.

4. Verfahren nach einem der Ansprüche 1 bis 3, dadurch gekennzeichnet, dass sich der Schlamm durchwegs auf Umgebungstemperatur befindet.

5. Verfahren nach einem der Ansprüche 1 bis 4, dadurch gekennzeichnet, dass sich der Schlamm während dem Ansäuern bei einer Temperatur von 50 bis 100°C befindet.

## Revendications

1. Un procédé pour produire un produit solide approprié comme aliment pour animaux, aliment pour poissons ou engrais, qui consiste à acidifier une boue activée ou une boue d'humus épaissie ayant une teneur en solides d'au moins 2% en poids, pour produire une boue floculée acidifiée ayant un pH de 1 à 4, à déshydrater la boue floculée acidifiée et à récupérer la matière solide résultante, caractérisé en ce que la boue épaissie est traitée avant acidification par une base pour élever le pH de la boue à plus de 8, la totalité de la boue traitée par la base étant ensuite soumise à ladite acidification, à la déshydratation et à la récupération du solide.

2. Un procédé selon la revendication 1, caractérisé en ce que le pH est élevé par traitement par la base à 11—12.

3. Un procédé selon la revendication 1 ou 2, caractérisé en ce que l'on laisse reposer la boue pendant 1 à 5 heures entre le traitement par la base et l'acidification.

4. Un procédé selon l'une quelconque des revendications 1 à 3, caractérisé en ce que la boue est à la température ambiante pendant tout le traitement.

5. Un procédé selon l'une quelconque des revendications 1 à 4, caractérisé en ce que la boue est à une température de 50 à 100°C pendant l'acidification.